# EUROPÄISCHE PATENTSCHRIFT

(11) **EP 0 837 891 B1**
(45) Veröffentlichungstag und Bekanntmachung des Hinweises auf die Patenterteilung: **29.09.1999**
(21) Anmeldenummer: 96922908.7
(22) Anmeldetag: 04.07.1996
(51) Int. Cl.: C08G 18/63, C08G 18/40, C09D 175/04, C09D 133/14

(54) **ÜBERZUGSMITTEL, DEREN VERWENDUNG UND VERFAHREN ZUR HERSTELLUNG VON MEHRSCHICHTÜBERZÜGEN**
COATING MATERIAL, ITS USE AND PROCESS FOR APPLYING A MULTILAYERED COATING
ENDUIT, SON UTILISATION ET PROCEDE D'APPLICATION D'ENDUITS A COUCHES MULTIPLES

(30) Priorität: 12.07.1995 DE 19525375
(43) Veröffentlichungstag der Anmeldung: 29.04.1998
(73) Patentinhaber: Herberts Gesellschaft mit beschränkter Haftung, 42285 Wuppertal (DE)
(72) Erfinder: DUECOFFRE, Volker, D-42119 Wuppertal (DE); FLOSBACH, Carmen, D-42287 Wuppertal (DE); KERBER, Hermann, D-42369 Wuppertal (DE); SCHUBERT, Walter, D-42349 Wuppertal (DE); HERRMANN, Friedrich, D-42117 Wuppertal (DE); REIFFERSCHEIDT, Heinz-Walter, D-44803 Bochum (DE); SCHILD, Dirk, D-42349 Wuppertal (DE)
(74) Vertreter: Hrabal, Ulrich, Dr.
(86) Internationale Anmeldenummer: EP9602944
(87) Internationale Veröffentlichungsnummer: WO9703102

(56) Entgegenhaltungen:
- EP-A- 0 036 975
- EP-A- 0 543 228
- EP-A- 0 607 792
- WO-A-92/02590
- DE-C- 4 223 182

## Beschreibung

Die Erfindung betrifft ein Verfahren zur Mehrschichtlackierung unter Verwendung von Überzugsmitteln, die insbesondere für Einbrenn-Mehrschichtüberzüge für die Autoserienlackierung geeignet sind, die sich insbesondere durch hohe Chemikalienbeständigkeit, Schwitzwasserbeständigkeit und ausgezeichneten Decklackstand auszeichnen.

Die EP-A-0 653 468, entsprechend der DE-A-43 38 703, beschreibt Überzugsmittel, die eine Kombination zweier unterschiedlicher hydroxylfunktioneller (Meth)acryl-Copolymerisate sowie eine Vernetzerkombination aus geblocktem Polyisocyanat und Aminoplastharz enthält. Gegebenenfalls kann Polyesterharz als weiteres Bindemittel zu den (Meth)acryl-Copolymerisaten zugemischt werden.

Die EP-A-0 541 604 und EP-A-0 206 072 beschreiben Acrylpolymere und deren Herstellung. Die Acrylpolymeren können in Gegenwart von Verdünnungsmitteln hergestellt werden, bei denen es sich um Polyesterpolyole handeln kann. Die EP-A-0 036 975 beschreibt Klarlacke für Mehrschichtlackierungen, bei denen es sich um ein Zweikomponentensystem (2K-System) aus einer Polyolkomponente und einer Biuret- und/oder Isocyanuratgruppen aufweisenden Polyisocyanatkomponente handelt. Bei der Polyolkomponente handelt es sich um ein Polyesterpolyol, das im Gemisch mit einem Polyacrylharz vorliegen kann. Die Herstellung des Polyacrylatharzes kann in Anwesenheit des Polyesterpolyols erfolgen.

Aufgabe der vorliegenden Erfindung war es ein Verfahren zur Mehrschichtlackierung, das für die Automobilserienlackierung geeignet ist und zu Überzügen führt, die sich durch eine hohe Chemikalienbeständigkeit, insbesondere Säurebeständigkeit, hohe Schwitzwasserbeständigkeit und ausgezeichneten Decklackstand auszeichnen.

Es hat sich gezeigt, daß diese Aufgabe gelöst werden kann durch ein Verfahren zur Herstellung von Mehrschichtlackierungen, bei dem auf ein gegebenenfalls vorbeschichtetes Substrat eine Basislackschicht aus einem Pigmente enthaltenden wäßrigen Überzugsmittel aufgebracht wird und diese mit einer transparenten Decklackschicht überlackiert wird, das dadurch gekennzeichnet ist, daß die transparente Decklackschicht aus einem nicht-wäßrigen Überzugsmittel hergestellt wird, das als Bindemittel enthält:
- A) 10 bis 90 Gew.-%: eines oder mehrerer hydroxyfunktioneller (Meth)acryl-Copolymerisate, erhältlich aus
- a1) 20 bis 40 Gew.-%: eines oder mehrerer Hydroxyalkylester der (Meth)acrylsäure
- a2) 10 bis 30 Gew.-%: eines oder mehrerer nichtfunktionalisierter (Meth)acrylate
- a3) 0 bis 5 Gew.-%: einer oder mehrerer ungesättigter Carbonsäuren
- a4) 10 bis 60 Gew.-%: eines oder mehrerer nichtfunktionalisierter von a2) unterschiedlicher Monomerer
- a5) 0 bis 15 Gew.-%: eines oder mehrerer aminofunktioneller Monomerer
- a6) 0 bis 5 Gew.-%: eines oder mehrerer mehrfach ungesättigter Monomerer
- B) 90 bis 10 Gew.-%: eines oder mehrerer hydroxyfunktioneller Polyester,
- C) 0 bis 40 Gew.-%: eines oder mehrerer von A) und B) unterschiedlicher hydroxyfunktioneller Bindemittel,
- D) 5 bis 50 Gew.-%: eines oder mehrerer blockierter Polyisocyanate,
- E) 5 bis 40 Gew.-%: einer oder mehrerer mit den Hydroxylgruppen der Komponenten A), B) und gegebenenfalls C) unter Ether- und/oder Estergruppenbildung vernetzenden Komponenten auf Triazinbasis,
wobei die Summe der Komponenten A) bis E) sich jeweils auf 100 Gew.-% ergänzt, und wobei mindestens 50 Gew.-% der (Meth)acryl-Copolymerisate, bezogen auf die Gesamtmenge der Komponente A) in Gegenwart von einem oder mehreren der hydroxyfunktionellen Polyester, entsprechend mindestens 20 Gew.-% der Gesamtmenge der Komponente B) hergestellt worden sind.

Die erfindungsgemäß verwendeten Überzugsmittel werden insbesondere als Einkomponenten-(1K)-Systeme formuliert.

Gemäß einer besonders bevorzugten Ausführungsform der Erfindung sind die bei dem Verfahren als Komponente B eingesetzten hydroxyfunktionellen Polyester erhältlich aus
- b1) 0 bis 60 Gew.-%: an Monocarbonsäuren des Molekulargewichtsbereichs 112 bis 600
- b2)10 bis 70 Gew.-%: Polycarbonsäuren des Molekulargewichtsbereichs 98 bis 600 oder Anhydriden derartiger Polycarbonsäuren
- b3)5 bis 40 Gew.-%: an drei- und/oder mehrwertigen Alkoholen des Molekulargewichtsbereichs 100 bis 400
- b4)0 bis 40 Gew.-%: an zweiwertigen Alkoholen des Molekulargewichtsbereichs 62 bis 2000
- b5)0 bis 30 Gew.-%: einwertigen Alkoholen des Molekulargewichtsbereichs 100 bis 400
- b6)0 bis 15 Gew.-%: an Hydroxycarbonsäuren des Molekulargewichtsbereichs 90 bis 280 oder an Lactonen derartiger Hydroxycarbonsäuren, und
- b7)0 bis 15 Gew.-%: an Aminoalkoholen des Molekulargewichtsbereichs 61 bis 300 und/oder an Aminocarbonsäuren des Molekulargewichtsbereichs 75 bis 260.

Bei der Bereitstellung der in den erfindungsgëmäß eingesetzten Überzugsmitteln enthaltenen Bindemittel werden mindestens 50 Gew.-%, bevorzugt über 70 Gew.-% der Gesamtmenge des (Meth)acryl-Copolymeren A) und bevorzugt seine Gesamtmenge in Gegenwart von mindestens 20 Gew.-%, bevorzugt über 30 Gew.-%, besonders bevorzugt über 40 Gew.-% des Polyesterharzes B) hergestellt, wobei sich die letztgenannten Gewichtsprozente auf die Gesamtmenge der Komponente B) beziehen. Werden mehrere Polyester als Komponente B) verwendet, so können diese bei der Herstellung des (Meth)acryl-Copolymeren A) als Gemisch vorliegen, oder es können einzelne oder ein Teil der Polyester eingesetzt und die restlichen zu einem späteren Zeitpunkt zugesetzt werden. Die Herstellung der (Meth)acryl-Copolymeren A) kann durch radikalische Polymerisation nach üblichen Verfahren erfolgen. Dabei werden mindestens 20 Gew.-%, bevorzugt über 30 Gew.-%, besonders bevorzugt über 40 Gew.-% des Polyesterharzes B) bevorzugt im Gemisch mit geeigneten organischen Lösemitteln in das Reaktionsgefäß vorgelegt, auf Reaktionstemperatur geheizt und mindestens 50 Gew.-%, bevorzugt über 70 Gew.-%, besonders bevorzugt die Gesamtmenge des gegebenenfalls Radikalinitiatoren enthaltenden Monomerengemischs für die Synthese des (Meth)acryl-Copolymerisats A) zudosiert. Die gegebenenfalls verbleibende Restmenge des gegebenenfalls Radikalinitiatoren enthaltenden Monomerengemischs für die Synthese des (Meth)acryl-Copolymerisats A) kann in gleicher Weise radikalisch polymerisiert werden, wobei nur organisches Lösemittel ohne Anteile des Polyesters B) in das Reaktionsgefäß vorgelegt wird, auf Reaktionstemperatur geheizt wird und danach so verfahren wird wie vorstehend beschrieben. Das durch Polymerisation der gegebenenfalls verbleibenden Restmenge des Monomerengemischs erhaltene (Meth)acrylcopolymere A) kann bei der Formulierung des eingesetzten Überzugsmittels dem in Gegenwart des Polyesterharzes B) synthetisierten (Meth)acrylcopolymeren A) zugemischt werden.

Der in der vorliegenden Beschreibung und den Patentansprüchen gebrauchte Ausdruck "(Meth)acryl" steht synonym für "Acryl und/oder Methacryl".

Die Polymerisation wird beispielsweise bei Temperaturen zwischen 80°C und 180°C, vorzugsweise bei 100°C bis 150°C durchgeführt.

Die Polymerisationsreaktion kann mit bekannten Radikalinitiatoren gestartet werden. Beispiele für Radikalinitiatoren sind Dialkylperoxide, wie Di-tert.-Butylperoxid, Di-Cumylperoxid; Diacylperoxid wie Dibenzoylperoxid, Dilauroylperoxid; Hydroperoxide, wie Cumolhydroperoxid, tert.-Butylhydroperoxid; Perester, wie tert.-Butylperbenzoat, tert.-Butylperpivalat, tert.-Butylper-3,5,5-trimethylhexanoat, tert.-Butylper-2-ethylhexanoat; Peroxiddicarbonate, wie Di-2-ethylhexylperoxydicarbonat, Dicyclohexylperoxydicarbonat; Perketale, wie 1,1-Bis(tert.-Butylperoxy)-3,5,5-trimethylcyclohexan, 1,1-Bis-(tert.-Butylperoxy)cyclohexan; Ketonperoxide, wie Cyclohexanperoxid, Methylisobutylketonperoxid und Azoverbindungen, wie 2,2'-Azo-bis(2,4-dimethyl-valeronitril), 2,2'-Azobis(2-Methylbutyronitril), 1,11-Azobiscyclohexancarbonitril, Azobisisobutyronitril; C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt. Bei der Polymerisation können die Monomeren auch getrennt bzw. zeitlich versetzt zudosiert werden. Die Monomeren oder das eingesetzte Monomerengemisch können die Radikalinitiatoren enthalten oder die Radikal initiatoren können zur Monomerenmischung gegebenenfalls geringfügig zeitversetzt zugesetzt oder separat zudosiert werden.

Die Herstellung des (Meth)acryl-Copolymeren A) erfolgt, wie vorstehend beschrieben, in Anwesenheit von zumindest Teilmengen des Polyesterharzes B), welches bevorzugt in einem organischen Lösemittel gelöst vorgelegt wird. Als Lösemittel können beispielsweise solche eingesetzt werden, wie sie auch für die Polyesterharzsynthese benutzt werden; das Polyesterharz kann somit als Lösung vorgelegt werden, die bei seiner Herstellung erhalten wurde. Es können aber auch andere geeignete Lösemittel eingesetzt werden. Beispielsweise eignen sich lackübliche Lösemittel, wie sie später auch in dem erfindungsgemäßen Überzugsmittel eingesetzt werden können, beispielsweise: Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol, aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe können ebenfalls im Verschnitt mit den oben genannten Lösemitteln eingesetzt werden.

Zur Regelung des Molekulargewichts können Kettenüberträger mitverwendet werden. Beispiele sind übliche Kettenüberträger, wie Mercaptane, Thioglykolsäureester, Chlorkohlenwasserstoffe, Cumol, dimeres α-Methylstyrol.

Die Polymerisationsbedingungen (Reaktionstemperatur, Zulaufzeit der Monomerenmischung, Lösungskonzentration) werden so eingerichtet, daß die (Meth)acryl-Copolymeren A) für das erfindungsgemäß hergestellte Überzugsmittel ein Zahlenmittel der Molmasse Mn (bestimmt durch Gelpermeationschromatographie unter Verwendung von Polystyrol als Eichsubstanz) zwischen 1000 und 10000 aufweisen.

Die hydroxylgruppenhaltigen (Meth)acryl-Copolymeren A) des erfindungsgemäß hergestellten Überzugsmittels liegen bevorzugt in einem Glasübergangstemperaturbereich zwischen -10 und +70°C.

Das (Meth)acryl-Copolymere A) weist bevorzugt eine OH-Zahl von 30 bis 250 mg KOH/g und eine Säurezahl von 0 bis 60, insbesondere 5 bis 20 mg KOH/g auf.

Als Monomere für die Herstellung der hydroxyfunktionellen (Meth)acrylcopolymeren A) werden als Komponente al) beispielsweise hydroxylfunktionalisierte (Meth)acrylate eingesetzt, die primäre und/oder sekundäre OH-Gruppen enthalten können.

Beispiele für Monomere mit primären Hydroxyfunktionen sind Hydroxyalkylester α,β-ungesättigter Carbonsäuren wie z.B. Acrylsäure und/oder Methacrylsäure mit einer primären OH-Gruppe im C₂-C₃-Hydroxyalkylrest wie Hydroxyethyl(meth)acrylat, sowie Hydroxyalkylester α,β-ungesättigter Carbonsäuren wie z.B. Acrylsäure und/oder Methacrylsäure mit einer primären OH-Gruppe im C₄-C₁₈-Hydroxalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)acrylat mit Caprolacton.

Beispiele für Monomere mit sekundären OH-Funktionen sind Hydroxypropyl(meth)acrylat, Addukte aus Glycidyl(meth)acrylat und gesättigten kurzkettigen Fettsäuren mit C₁-C₃-Alkylresten, z.B. Essigsäure oder Propionsäure, sowie Addukte aus Glycidylestern stark verzweigter Monocarbonsäuren (Glycidylester der Versaticsäure ist unter dem Handelsnamen Cardura E erhältlich) mit ungesättigten COOH-funktionellen Verbindungen wie z.B. Acryl- und/oder Methacrylsäure, Maleinsäure, Crotonsäure, Addukte aus Cardura E mit ungesättigten Anhydriden wie z.B. Maleinsäureanhydrid, Umsetzungsprodukte aus Glycidyl(meth)acrylat mit gesättigten verzweigten oder unverzweigten Fettsäuren mit C₄-C₂₀-Alkylresten, z.B. Butansäure, Capronsäure, Laurinsäure, Palmitinsäure, Stearinsäure, Arachidonsäure. Die Umsetzung der Acrylsäure oder Methacrylsäure mit dem Glycidylester einer Carbonsäure mit einem tertiären α-Kohlenstoffatom kann vor, während (in situ) oder nach der Polymerisationsreaktion im Sinne einer polymeranalogen Umsetzung erfolgen.

Bevorzugte Monomere al) sind Butandiol-1,4-mono(meth)acrylat, Hydroxyethyl(meth)acrylat und 2-Hydroxypropyl(meth)acrylat.

Als Monomere für die Herstellung der hydroxyfunktionellen (Meth)acrylcopolymeren A) können als Komponente a2) beispielsweise nichtfunktionalisierte (Meth)acrylate verwendet werden, wie langkettige, verzweigte oder unverzweigte ungesättigte Monomere, wie Alkyl(meth)acrylate mit C₈-C₁₈ Ketten im Alkylteil, z.B. Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Cyclohexyl(meth)acrylat, Laurylacrylat-1214, Isobornyl(meth)acrylat, 4-Tertiärbutylcyclohexylmethacrylat. Weitere Beispiele sind kurz- oder mittelkettige, verzweigte oder unverzweigte ungesättigte Monomere, wie Alkyl(meth)acrylate mit C₁-C₇-Ketten im Alkylteil, z.B. Methyl(meth)acrylat, Ethyl(meth)acrylat, Propylacrylat, Butyl(meth)acrylat, Isopropyl(meth)acrylat, Isobutyl(meth)acrylat, Tertiärbutyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat.

Bevorzugte Monomere a2) sind Butyl(meth)acrylat, Ethylhexyl(meth)acrylat, Cyclohexyl(meth)acrylat und Isobutyl(meth)acrylat.

Beispiele für geeignete ungesättigte Carbonsäuren der Komponente a3) sind ungesättigte Mono- und/oder Dicarbonsäuren und/oder Halbester von Dicarbonsäuren, wie z.B. Acryl-, Methacryl-, Itacon-, Croton, Isocroton-, Aconit-, Malein- und Fumarsäure, Halbester der Malein- und Fumarsäure sowie B-Carboxyethylacrylat und Addukte von Hydroxyalkylestern der Acrylsäure und/oder Methacrylsäure mit Carbonsäureanhydriden, wie z.B. der Phthalsäure-mono-2-methacryloyloxyethylester, sowie Halbester von Maleinsäureanhydrid durch Anlagerung von gesättigten aliphatischen Alkoholen wie z.B. Ethanol, Propanol, Butanol und/oder Isobutanol.

Bevorzugtes Monomeres a3) ist Acrylsäure.

Die Komponente a3) wird bei der Herstellung des (Meth)acrylcopolymeren A) bevorzugt in einem solchen Mengenanteil eingesetzt, daß eine Säurezahl von 5 bis 20 mg KOH/g des (Meth)acrylcopolymeren A) erhalten wird.

Beispiele für nicht-funktionalisierte sich von a2) unterscheidende Monomere der Komponente a4) sind monovinylaromatische Verbindungen. Vorzugsweise enthalten sie 8 bis 10 Kohlenstoffatome je Molekül. Beispiele für geeignete Verbindungen sind Styrol, Vinyltoluole, a-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol, Vinylester von alpha,alpha-dialkylsubstituerten verzweigten aliphatischen Monocarbonsäuren (beispielsweise das Handelsprodukt VEOVA 10 der Shell AG) sowie Alkylester der Malein-, Fumar-, Tetrahydrophthal-, Croton-, Isocroton-, Vinylessig- und Itaconsäure, wie z.B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadexyl-, Octadecyl- und Octadecenylester, gamma-Methacryloxypropyltrimethoxysilan.

Bevorzugt werden Styrol und seine Derivate, wie z.B. Vinyltoluole als Monomere der Komponente a4) eingesetzt.

Beispiele für Monomere der Komponente a5) sind solche mit endständigen tert.-Aminogruppen wie tert.-Aminomethylmethacrylat oder tert.-Aminopropylmethacrylat. Im Falle der Verwendung derartiger Monomerer ist es zweckmäßig, auf die gleichzeitige Verwendung von glycidylfuktionalisierten Monomeren zu verzichten, da sonst ein Gelieren des Polymeren nicht auszuschließen ist.

Weiterhin können auch kleine Anteile Monomere der Komponente a6) mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren. Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylolpropantriacrylat,

Trimethylolpropantrimethacrylat und ähnliche Verbindungen.

Die Polyesterharze B) besitzen bevorzugt Zahlenmittel der Molmassen (Mn) von 200 bis 5000, besonders bevorzugt 1000 bis 3000, eine OH-Zahl von 30 bis 450 mg KOH/g, besonders bevorzugt von 120 bis 280 mg KOH/g und eine Säurezahl von 0 bis 60 mg KOH/g, besonders bevorzugt von 2 bis 35 mg KOH/g und können beispielsweise hergestellt werden durch Polykondensation aus den Komponenten b1) bis b7). Die Polykondensation kann nach den üblichen, dem Fachmann geläufigen Verfahren durchgeführt werden, beispielsweise in Gegenwart von üblichen Veresterungskatalysatoren und bei erhöhten Temperaturen von z.B. 180 bis 250°C beispielsweise in der Schmelze. Gegebenenfalls können auch Schleppmittel wie z.B. Xylol verwendet werden.

Die Gewichtsprozente der bei der Herstellung der Polyester eingesetzten Komponenten b1) bis b7) werden insbesondere so gewählt, daß sich die gewünschten OH-Zahlen ergeben.

Geeignete Monocarbonsäuren b1) sind beispielsweise Benzoesäure, tert.-Butylbenzoesäure, Hexahydrobenzoesäure, gesättigte Fettsäuren wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z.B. Sojafettsäure, Sorbinsäure, Erdnußölfettsäure, Konjuenfettsäuren, Tallölfettsäure, Safflorölfett-säure sowie Gemische dieser oder anderer Monocarbonsäuren. Bevorzugt liegt der Anteil an Monocarbonsäuren über 10 Gew.-% und unter 40 Gew.-%.

Bevorzugt werden 2-Ethylhexansäure und Isononansäure als Monocarbonsäure bl) eingesetzt.

Die Komponente b2) wird in einer Menge von 10 bis 70 Gew.-%, beispielsweise von 10 bis 40 Gew.-% eingesetzt. Geeignete Polycarbonsäuren b2) bzw. Anhydride sind beispielsweise Phthalsäure(anhydrid), Isophthalsäure, Terephthalsäure, Tetrahydrophthalsäure(anhydrid), Hexahydrophthalsäure(anhydrid), 1,3- und 1,4-Cyclohexandicarbonsäure, Maleinsäure(anhydrid), Bernsteinsäure(anhydrid), Fumarsäure, Adipinsäure, Sebacinsäure, Azelainsäure, Dimerfettsäuren, Trimerfettsäuren, Trimellithsäure(anhydrid), Pyromellithsäure(anhydrid) und Gemische dieser oder anderer Säuren.

Bevorzugte Polycarbonsäuren b2) sind Adipinsäure sowie cycloaliphatische Dicarbonsäuren wie Hexahydrophthalsäure(anhydrid) und 1,4-Cyclohexandicarbonsäure.

Geeignete drei- und mehrwertige Alkohole b3) sind beispielsweise Glycerin, Trimethylolpropan, Pentaerythrit, Dipentaerythrit und Gemische dieser oder anderer mehrwertiger Alkohole.

Bevorzugte drei- und mehrwertige Alkohole b3) sind Trimethylolpropan und Pentaerythrit.

Geeignete zweiwertige Alkohole b4) sind beispielsweise Ethylenglykol, 1,2- und 1,3-Propylenglykol, 1,3-, 1,4-, 2,3-Butandiol, 1,5-Pentandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol und Gemische dieser oder anderer Diole.

Bevorzugte zweiwertige Alkohole b4) sind 1,6-Hexandiol und Neopentylglykol.

Geeignete einwertige Alkohole b5) sind beispielsweise n-Hexanol, Cyclohexanol, Decanol, Dodecanol, Tetradecanol, Octanol, Octadecanol, natürliche und synthetische Fettalkohole wie z.B. Laurylalkohol, Ocenol 110/130 (Fa. Henkel) und Gemische dieser und anderer Alkohole.

Geeignete Ausgangskomponenten b6) sind beispielsweise Dimethylolpropionsäure, Milchsäure, Apfelsäure, Weinsäure, epsilon-Hydroxycapronsäure, Rizinusölfettsäure oder epsilon-Caprolacton.

Bevorzugte Komponenten b6) sind Dimethylolpropionsäure und epsilon-Caprolacton.

Geeignete Ausgangskomponenten b7) sind beispielsweise Aminoethanol, 2-Aminopropanol, Diethanolamin, Aminoessigsäure oder 6-Aminohexansäure.

Geeignete Veresterungskatalysatoren bei der Herstellung des Polyesterharzes B) können z.B. sein: Dibutylzinnoxid, Schwefelsäure, p-Toluolsulfonsäure.

Nach beendeter Polykondensation kann der Festkörpergehalt des Polyesterharzes B) gegebenenfalls durch Verdünnung mit geeigneten organischen Lösemitteln eingestellt werden. Beispiele für geeignete Lösemittel sind die vorstehend bei der Synthese des (Meth)acrylcopolymeren A) erwähnten Lösemittel bzw. Gemische dieser oder anderer Lösemittel.

Das (Meth)acryl-Copolymere A) wird, wie vorstehend beschrieben, im Schoße des Polyesterharzes B) hergestellt.

Die verwendbaren hydroxy- und gegebenenfalls carboxyfunktionellen (Meth)acrylcopolymeren A) und Polyesterharze B) können mit einem Lacton "kettenverlängert" werden. Die Lactone (cyclische Ester) lagern sich an Hydroxyl- und/oder Carboxylgruppen an, wobei der Ring geöffnet wird und eine neue endständige Hydroxyl- oder Carboxylgruppe entsteht. Ein Beispiel für ein besonders bevorzugtes Lacton ist das epsilon-Caprolacton.

Beispiele für andere Lactone sind Lactone, wie beta-Propiolacton, delta-Valerolacton, gamma-Butyrolacton, zeta-Enantholacton, eta-Caprylolacton. Derartige Lactone können substituiert sein: Beispiele hierfür sind 6-Methyl-epsilon-caprolacton, 3-Methyl-epsilon-caprolacton, 5-Methyl-epsilon-caprolacton, 5-Vinyl-epsilon-caprolacton, 4-Methyl-delta-valerolacton, 3,5-Dimethyl-epsilon-caprolacton, und Mischungen davon. Die Umsetzung mit dem Lacton kann beispielsweise unmittelbar im Anschluß an die Harzsynthese, das heißt an die Synthese des (Meth)acrylpolymerisats A) und/oder des Polyesterharzes B) erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Die erfindungsgemäß eingesetzten Überzugsmittel können als Komponente C) ein oder mehrere von A) und B) verschiedene hydroxyfunktionelle Bindemittel enthalten, beispielsweise von A) verschiedene (Meth)acrylcopolymerharze, von B) verschiedene Polyesterharze oder auch Polyurethanharze. Bevorzugt enthalten die erfindungsgemäßen Überzugsmittel neben A) und B) keine weiteren Bindemittel.

Die erfindungsgemäß eingesetzten Überzugsmittel enthalten als Komponente D) ein oder mehrere blockierte Polyisocyanate.

Beispiele für Polyisocyanate, die in blockierter Form als Komponente D) im erfindungsgemäßen Überzugsmittel eingesetzt werden können, sind cycloaliphatische, aliphatische oder aromatische Polyisocyanate wie 1,2-Propylendiisocyanat, 2,3-Butylendiisocyanat, Tetramethylendiisocyanat, 1,6-Hexamethylendiisocyanat, 2,2,4-Trimethylendiisocyanat, 1,12-Dodecandiisocyanat, Cyclohexan-1,3-und 1,4-diisocyanat, 1-Isocyanato-3,3,5-trimethyl-5-isocyanatomethylcyclohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyldiphenylmethan, Naphthylen-1,5-diisocyanat, m-Xylylendiisocyanat, p-Xylylendiisocyanat, Triphenylmethan-4,4'-triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Uretdiongruppen, Urethangruppen, acylierte Harnstoffgruppen und Biuretgruppen aufweisende Polyisocyanate.

Besonders gut für die Erfindung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret, das sich von Isophorondiiosocyanat oder Hexandiisocyanat ableitende Isocyanurat oder niedermolekulare Urethangruppen aufweisende Polyisocyanate, wie sie durch Umsetzung von im Überschuß eingesetzten Isophorondiisocyanat mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet. In diesen bekannten Prepolymeren entspricht das Verhältnis von Isocyanatgruppen zu gegenüber Isocyanat reaktiven Wasserstoffatomen 1,05 bis 10:1, vorzugsweise 1,1 bis 3:1, wobei die Wasserstoffatome vorzugsweise aus Hydroxylgruppen stammen. Die Art und Mengenverhältnisse der bei der Herstellung der NCO-Prepolymeren eingesetzten Ausgangsmaterialien werden im übrigen vorzugsweise so gewählt, daß die NCO-Prepolymeren eine mittlere NCO-Funktionalität von 2 bis 4, vorzugsweise von 2 bis 3 und ein Zahlenmittel der Molmasse von 500 bis 10000, vorzugsweise von 800 bis 4000 aufweisen.

Ebenfalls möglich ist die Verwendung von Copolymeren des vinylisch ungesättigten Monoisocyanates Dimethyl-m-isopropenylbenzylisocyanat als Polyisocyanat, wie sie unter anderem in der DE-A-41 37 615 beschrieben sind.

Es können übliche Blockierungsmittel verwendet werden, wie übliche CH-acide, NH-, SH- oder OH-funktionelle Verbindungen, die unter Härtungsbedingungen die Vernetzung ermöglichen. Beispiele sind CH-acide Verbindungen wie Acetylaceton oder CH-acide Ester, wie z.B. Acetessigsäurealkylester, Malonsäuredialkylester, aliphatische oder cycloaliphatische Alkohole, wie n-Butanol, Isopropanol, tert.-Butanol, Furfurol, 2-Ethylhexanol, Cyclohexanol; Phenole, wie Kresol, tert.-Butylphenol, Dialkylaminoalkohole wie Dimethylaminoethanol, Oxime wie Methylethylketoxim, Acetonoxim, Cyclohexanonoxim, Acetophenonoxim, Lactame wie ε-Caprolactam oder Pyrrolidon-2, Imide wie Phthalimid oder N-Hydroxy-maleinimid, Hydroxyalkylester, Hydroxamsäuren und deren Ester, N-Alkylamide wie Methylacetamid, Imidazole wie 2-Methylimidazol, Pyrazole wie 2,3-Dimethylpyrazol. Es können aber auch Gemische dieser Blockierungsmittel eingesetzt werden.

Im Rahmen der vorliegenden Erfindung sind CH-acide Ester und/oder Oxime als Blockierungsmittel für die Polyisocyanate bevorzugt, besonders bevorzugt sind die CH-aciden Ester. Die Alkylgruppen der Ester, die im Malonsäuredialkylester bzw. Acetessigsäureester gleich oder verschieden sein können, weisen bevorzugt 1 bis 5 Kohlenstoffatome auf. Beispiele für Malonsäuredialkylester sind C₁-C₅-Alkylester, wie z.B. Malonsäuredimethyl- diethyl-, diisopropyl, dibutyl-, di-tert.-butyl-, dipentylester. Besonders bevorzugt ist Malonsäurediethylester. Beispiele für Acetessigsäurealkylester sind C₁-C₅-Alkylester wie Acetessigsäuremethyl-, ethyl-, isopropyl-, butyl-, tert.-butyl, pentylester. Besonders bevorzugt ist Acetessigsäurethylester. Beispiele für bevorzugte Oxime sind Acetonoxim und Butanonoxim. Möglich ist es auch Gemische dieser Blockierungsmittel einzusetzen.

Das Molverhältnis der aciden Wasserstoff enthaltenden Blockierungsmittel zu den NCO-Gruppen der Isocyanate, beispielsweise das Verhältnis der Malonsäuredialkylester und/oder Acetessigsäurealkylester zu NCO-Gruppen kann variiert werden, beispielsweise von 0,5 : 1 bis 1,5 : 1. Bei einem NCO-Überschuß können die freien NCO-Gruppen gegebenenfalls mit anderen Reaktionspartnern umgesetzt werden.

Die Blockierungsreaktion mit CH-aciden Verbindungen kann bevorzugt katalysiert werden. Bei den eingesetzten Katalysatoren für die Blockierung der Polyisocyanate handelt es sich bevorzugt um Alkalihydroxide, beispielweise Alkalimetallhydroxide, wie Lithium-, Natrium- und/oder Kaliumhydroxid. Bevorzugt werden die wasserfreien Alkalimetallhydroxide eingesetzt. Besonders bevorzugt wird Lithiumhydroxid verwendet. Die Katalysatoren werden in geringen Mengen eingesetzt, beispielsweise in Mengen von 0,1 bis 2 Gew.-%, bevorzugt 0,3 bis 1 Gew.-%, bezogen auf das Gewicht von Isocyanat und CH-acidem Blockierungsmittel. Die Katalysatoren werden in fester Form, beispielsweise pulverisiert, eingesetzt und nach Beendigung der Blockierungsreaktion aus dem Reaktionsgemisch mechanisch entfernt, beispielsweise durch Filtration.

Zur Blockierung können auch mehr als eine Art von Schutzgruppe, bevorzugt solche mit unterschiedlicher Reaktivität, verwendet werden.

Es ist so beispielsweise möglich, ein Gemisch von zwei oder mehreren unterschiedlich blockierten Polyisocyanaten D) zu verwenden oder ein Polyisocyanat einzusetzen, das intramolekular mit zwei oder mehreren unterschiedlichen Schutzgruppen blockiert ist.

Weiterhin enthalten die erfindungsgemäß eingesetzten Überzugsmittel ein oder mehrere mit den Hydroxylgruppen der Komponenten A), B) und gegebenenfalls C) unter Ether- und/oder Estergruppenbildung vernetzende Komponenten E) auf Triazinbasis.

Bei den unter Ethergruppenbildung mit den Hydroxylgruppen der Komponenten A), B) und gegebenenfalls C) vernetzenden Komponenten E) auf Triazinbasis handelt es sich beispielsweise bevorzugt um als Vernetzer übliche Melaminharze, wie z.B. Methyl-veretherte Melaminharze, wie die Handelsprodukte Cymel 325, Cymel 327, Cymel 350 und Cymel 370, Maprenal MF 927. Weitere Beispiele für verwendbare Melaminharze sind butanol- oder isobutanolveretherte Melaminharze wie z.B. die Handelsprodukte Setamin US 138 oder Maprenal MF 610; mischveretherte Melaminharze, die sowohl butanol- als auch methanolverethert sind, wie z.B. Cymel 254, sowie Hexamethyloxymethylmelamin (HMMM) wie z.B. Cymel 301 oder Cymel 303, wobei letztere zur Vernetzung einen externen Säurekatalysator wie z.B. p-Toluolsulfonsäure benötigen können. Derartige Säurekatalysatoren können gegebenenfalls mit Aminen oder Polyepoxiden ionisch oder nicht-ionisch blockiert sein.

Bei den unter Estergruppenbildung mit den Hydroxylgruppen der Komponenten A), B) und gegebenenfalls C) vernetzenden Komponenten E) auf Triazinbasis handelt es sich um Umesterungsvernetzer, insbesondere unter Bildung von Urethangruppen (Carbaminsäureestergruppen) mit den Hydroxylgruppen reagierende Umesterungsvernetzer, wie beispielsweise bevorzugt Tris(alkoxycarbonylamino)triazin, wie es in der EP-A-604 922 beschrieben wird.

Die erfindungsgemäß eingesetzten Überzugsmittel können neben den bereits genannten Lösemitteln zusätzlich lackübliche Hilfsstoffe enthalten, beispielsweise Verlaufsmittel z.B. auf der Basis von (Meth)acryl-Homopolymerisaten, Silikonöle, Weichmacher wie Phosphorsäure-, Phthalsäure- oder Zitronensäureester, Rheologiebeeinflusser, wie pyrogenes Siliziumdioxid, Mikrogele, harnstoffgruppenhaltige Umsetzungsprodukte aus primären Aminen und Polyisocyanaten ("sagging control agents"), hydriertes Ricinusöl, Härtungsbeschleuniger wie z.B. Phosphorsäure, Phosphorsäureester, Dicarbonsäure-Halbester, Zitronensäure; organische Metalsalze, wie Dibutylzinndilaurat, Zink-Naphthenat, Wismuttricarboxylat, ferner tertiäre Aminogruppen enthaltende Verbindungen wie Triethylamin und Lichtschutzmittel.

Das erfindungsgemäß eingesetzte Überzugsmittel kann auch in einer wasserverdünnbaren Form vorliegen. Sofern eine wäßrige Emulsion erstellt werden soll, wird das bei der Herstellung des die Komponenten A) und B) enthaltenden Bindemittels verwendete Lösemittel weitgehend entfernt. Dies kann beispielsweise destillativ, gegebenenfalls unter Vakuum erfolgen. Das so erhaltene die Komponenten A) und B) enthaltende Bindemittelkonzentrat, das einen hohen Festkörpergehalt von beispielsweise 90 Gew.-% hat, kann dann, sofern saure Gruppierungen enthalten sind, mit einer üblichen Base, z.B. Ammoniak oder einem organischem Amin, z.B. Triethylamin, neutralisiert werden. Das erhaltende neutralisierte A) und B) enthaltende Bindemittel kann, gegebenenfalls nach Zumischung der Vernetzer D) und E) in Wasser emulgiert werden. Dies kann beispielsweise unter starkem Rühren und erforderlichenfalls unter Erwärmen, beispielsweise auf Temperaturen von 30 bis 80°C, z.B. 50°C, erfolgen.

Es ist auch möglich, bei der Herstellung des (Meth)acrylcopolymeren A) Monomere mit basischen Gruppierungen, z.B. solche, die tertiäre Amingruppen enthalten, mit einzupolymerisieren. Beispiele für solche Monomere sind Monomere der Komponente a5). Das so hergestellte, basische Gruppen enthaltende Bindemittel kann dann mit Säuren, z.B. anorganischen oder organischen Säuren, wie Ameisensäure, Essigsäure, neutralisiert werden. Das erhaltene neutralisierte A) und B) enthaltende Bindemittel kann, gegebenenfalls nach Zumischung der Vernetzer D) und E) in Wasser emulgiert werden. Dies kann beispielsweise unter starkem Rühren und erforderlichenfalls unter Erwärmen, beispielsweise auf Temperaturen von 30 bis 80°C, z.B. 50°C, erfolgen.

Alternativ kann das A) und B) enthaltende Bindemittel mit Hilfe eines üblichen, nicht-ionischen Emulgators emulgiert werden. Dies geschieht z.B. durch Homogenisieren des Bindemittelkonzentrats gegebenenfalls zusammen mit den Vernetzern D) und E) und eines oder mehrerer nichtionischer Emulgatoren, gegebenenfalls unter Erwärmen, beispielsweise auf Temperaturen von 30 bis 80°C, z.B. 60°C. Ein derartiges Gemisch kann in einer üblichen Homogenisierungseinrichtung emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf das Bindemittelkonzentrat, eingesetzt. Wasserunlösliche Komponenten des Überzugsmittels wie z.B. Lackadditive wie Lichtschutzmittel oder Verlaufshilfsmittel, beispielsweise auf der Basis von Silikonölen können vor der Überführung in die wäßrige Phase dem Bindemittelkonzentrat zugemischt und zusammen emulgiert werden.

Die erfindungsgemäß eingesetzten Überzugsmittel sind besonders geeignet zur Erzeugung einer transparenten Deckschicht (Klarlackschicht) bei der Herstellung ofentrocknender Mehrschichtüberzüge. Die Deckschicht kann beispielsweise nach dem Naß-in-Naß-Verfahren aufgetragen werden, worauf beide Schichten gemeinsam gehärtet werden.

Die erfindungsgemäß verwendeten Überzugsmittel werden nach bekannten Verfahren, wie z.B. Spritzen, Tauchen, Rollen oder Rakeln, appliziert.

Die Überzugsmittel können auch unter Verwendung von überkritischem Kohlendioxid als Lösemittel im Spritzverfahren appliziert werden. Dabei kann der Gehalt an organischen Lösemitteln stark verringert werden. Nach einer Abdunstphase wird das applizierte Überzugsmittel bevorzugt durch Erwärmen vernetzt. Die Einbrenntemperaturen liegen bevorzugt zwischen 80 und 160°C, besonders bevorzugt zwischen 120 und 150°C. Die Härtungszeiten liegen beispielsweise in der Größenordnung von 20 bis 40 Minuten. Die Schichtdicke des eingebrannten Films beträgt beispielsweise ca. 15 bis 50 µm. Dabei entsteht ein vernetzter, harter, glänzender Lacküberzug. Bei der erfindungsgemäßen Applikation des Klarlacküberzugs auf einen Basislack kann bevorzugt naß-in-naß gearbeitet werden, oder der Basislack wird vorher durch Erwärmen getrocknet. Es entsteht eine besonders gute Haftung der beiden Schichten.

Erfindungsgemäß können beispielsweise Basislacke überlackiert werden, die übliche Decklackpigmente enthalten können, bevorzugt enthalten die Basislacke Effektpigmente, wie z.B. Metallic-Pigmente. Als Bindemittelbasis das Basislacks werden bevorzugt Polyester-, Polyurethan- oder Acrylatharze eingesetzt. Diese Bindemittel können gegebenenfalls über Vernetzer, z.B. Melamin- oder Isocyanatderivate, vernetzt werden.

Das erfindungsgemäße Verfahren eignet sich besonders für auf dem Kraftfahrzeugsektor, jedoch auch auf anderen Gebieten.

Es ist besonders für die Automobilserienlackierung geeignet.

Das erfindunsgemäß Verfahren ist besonders geeignet zur Herstellung eines ofentrocknenden Mehrschichtüberzugs. Es eignet sich insbesondere für die Serienlackierung von Kraftfahrzeugkarosserien und deren Teilen.

Die mit dem erfindungsgemäßen Verfahren hergestellten Klarlackschichten zeichnen sich durch eine überlegene Chemikalienfestigkeit, insbesondere Säurebeständigkeit, und ausgezeichneten Decklackstand, sowie Schwitzwasserbeständigkeit (die sich in einer besonders günstigen Feuchtraumbeständigkeit ausdrückt) aus.

### Beispiel 1

In eine für eine Polyestersynthese geeignete Reaktionsapparatur werden 393,1 g Isononansäure, 1,4 g Phosphorsäure (85 %ig), 287,4 g Hexahydrophthalsäureanhydrid, 274,9 g Peanterythrit und 43,2 g Xylol eingefüllt. Unter Rühren und Überleiten von Inertgas wird der Ansatz unter Wasserabspaltung innerhalb von 5 Stunden auf 210°C geheizt. Nach Erreichen einer SZ von ca. 23 wird auf 140°C abgekühlt und mit SOLVESSO 100 (Handelsprodukt der Shell AG) auf einen Festkörper von 70 Gew.-% verdünnt.

### Beispiel 2

In eine für eine Polyestersynthese geeignete Reaktionsapparatur werden 170,3 g Hexandiol-1,6, 128,9 g Trimethylolpropan, 0,9 g Phosphorsäure (85 %ig), 37 g Xylol, 228,2 g Hexahydrophthalsäureanhydrid und 278,6 g dimere Fettsäure eingefüllt. Unter Rühren und Überleiten von Inertgas wird der Ansatz unter Wasserabspaltung innerhalb von 5 Stunden auf 220°C geheizt. Nach Erreichen einer SZ von ca. 25 wird auf 140°C abgekühlt und mit SOLVESSO 100 (Handelsprodukt der Shell AG) auf einen Festkörper von 80 Gew.-% verdünnt.

### Beispiel 3

In einen 2-Liter-Dreihals-Schliffkolben, der mit einem Rührwerk, Kontaktthermometer, Kugelkühler und Tropftrichter ausgerüstet ist, werden 440 g der Polyester-Lösung aus Beispiel 1, 28 g Xylol, 73 g n-Butylacetat und 90,7 g SOLVESSO 100 (Handelsprodukt der Shell AG) vorgelegt und unter Rühren bei eingeschalteter Rückflußkühlung auf 138°C geheizt. Innerhalb von 6 Stunden wird eine Mischung aus 2,5 g Acrylsäure, 49,5 g Butylacrylat, 93 g 2-Hydroxyethylmethacrylat, 154 g Styrol, 2,2 g Di-tert.-Butyl-peroxid und 7 g Tert.-Butylperoctoat kontinuierlich zudosiert. Anschließend wird der Ansatz 4 Stunden bei 138°C nachpolymerisiert, auf 100°C abgekühlt und mit 60,1 g n-Butylacetat verdünnt. Die Polymerisat-Lösung hatte einen Festkörper von 62,6 %, eine Säurezahl von 16,5 mg KOH/g, eine OH-Zahl von 135 mg KOH/g und eine Viskosität von 1440 mPa.s/25°C.

### Beispiel 4

In einen 2-Liter-Dreihals-Schliffkolben, der mit einem Rührwerk, Kontaktthermometer, Kugelkühler und Tropftrichter ausgerüstet ist, werden 420 g der Polyester-Lösung aus Beispiel 2, 30 g n-Butanol und 140 g SOLVESSO 100 (Handelsprodukt der Shell AG) vorgelegt und unter Rühren bei eingeschalteter Rückflußkühlung auf 147°C geheizt. Innerhalb von 4 Stunden wird eine Mischung aus 3 g Acrylsäure, 55 g Butylacrylat, 100 g 2-Hydroxyethylmethacrylat, 167 g Styrol, 9 g Di-tert.-Butylperoxid kontinuierlich zudosiert. Anschließend wird der Ansatz 4 Stunden bei 145°C nachpolymerisiert, auf 100°C abgekühlt und mit 76 g SOLVESSO 100 verdünnt. Die Polymerisat-Lösung hatte einen Festkörper von 67,0 %, eine Säurezahl von 14,0 mg KOH/g, eine OH-Zahl von 144 mg KOH/g und eine Viskosität von 2460 mPa.s/25°C.

### Beispiel 5

Ein einkomponentiger Klarlack wurde hergestellt durch homogenes Vermischen von 32,0 Teilen der Harzlösung aus Beispiel 3 mit 17,0 Teilen der Harzlösung aus Beispiel 1, 15,5 Teilen einer 65 %igen Lösung eines Malonsäurediethylester-verkappten Isocyanurats von Isophorondiisocyanat in SOLVESSO 100, 16,3 Teilen einer 55 %igen Lösung eines butanolveretherten Melaminharzes, 1,0 Teilen eines Lichtschutzmittels vom Typ Benzotriazol, 0,5 Teilen eines Lichtschutzmittels vom Typ HALS, 0,7 Teilen einer 10 %igen Silikonöl-Lösung, 5 Teilen n-Butanol und 12 Teilen SOLVESSO 100 (Handelsprodukt der Shell AG).

### Beispiel 6

Ein einkomponentiger Klarlack wurde hergestellt durch homogenes Vermischen von 29,6 Teilen der Harzlösung aus Beispiel 4 mit 17,0 Teilen der Harzlösung aus Beispiel 1, 15,5 Teilen einer 65 %igen Lösung eines Malonsäurediethylester-verkappten Isocyanurats von Isophorondiisocyanat in SOLVESSO 100, 16,3 Teilen einer 55 %igen Lösung eines butanolveretherten Melaminharzes, 1,0 Teilen eines Lichtschutzmittels vom Typ Benzotriazol, 0,5 Teilen eines Lichtschutzmittels vom Typ HALS, 0,7 Teilen einer 10 %igen Silikonöl-Lösung, 5 Teilen n-Butanol und 14,4 Teilen SOLVESSO 100 (Handelsprodukt der Shell AG).

Mit in der Automobilserienlackierung verwendeten handelsüblichen kathodisch abscheidbarem Elektrotauchlack (KTL) (18 µm) und handelsüblichem Füller (35 µm) vorbeschichtete Karosseriebleche werden mit handelsüblichem wasserverdünnbarem Metallicbasislack in einer Trockenschichtdicke von 15 µm lackiert und 6 min. bei 80°C vorgetrocknet. Direkt anschließend wird der Klarlack aus Beispiel 5, 6 bzw. einem Vergleichsbeispiel (Beispiel 2 aus EP-A-0 653 468) in einer Trockenschichtdicke von 35 µm durch Spritzauftrag naß-in-naß appliziert und nach 5 min. Ablüften bei Raumtemperatur 20 min. bei 140°C (Objekttemperatur) eingebrannt.

Die erhaltenen Ergebnisse sind in Tabelle 1 aufgeführt. Die Tests wurden nach allgemeinen Industrienormen durchgeführt. Zur Prüfung der Klarlacke auf Schwefelsäurebeständigkeit wurde der Tropftest mit 10 %iger Schwefelsäure gewählt. Die Prüfbleche werden auf eine beheizbare Platte gelegt und auf 60°C geheizt.

Dabei muß gewährleistet sein, daß die Bleche zur optimalen Temperaturübertragung plan aufliegen. Am Ende der Aufheizphase, d.h. bei 60°C wird pro Minute ein Tropfen auf die Klarlackoberfläche appliziert. Die Gesamtzeit beträgt 30 Minuten. Nach Ablauf der Prüfzeit wird die Lackierung mit Wasser abgewaschen. Wenn notwendig, kann zum Reinigen zusätzlich eine Bürste verwendet werden.

Zur Beurteilung der Schwefelsäurebeständigkeit wird die Einwirkzeit in Minuten angegeben, bei der die erste sichtbare Filmveränderung (Quellung), Beschädigung (Vermattung) und der Basislack-Angriff auftrat.

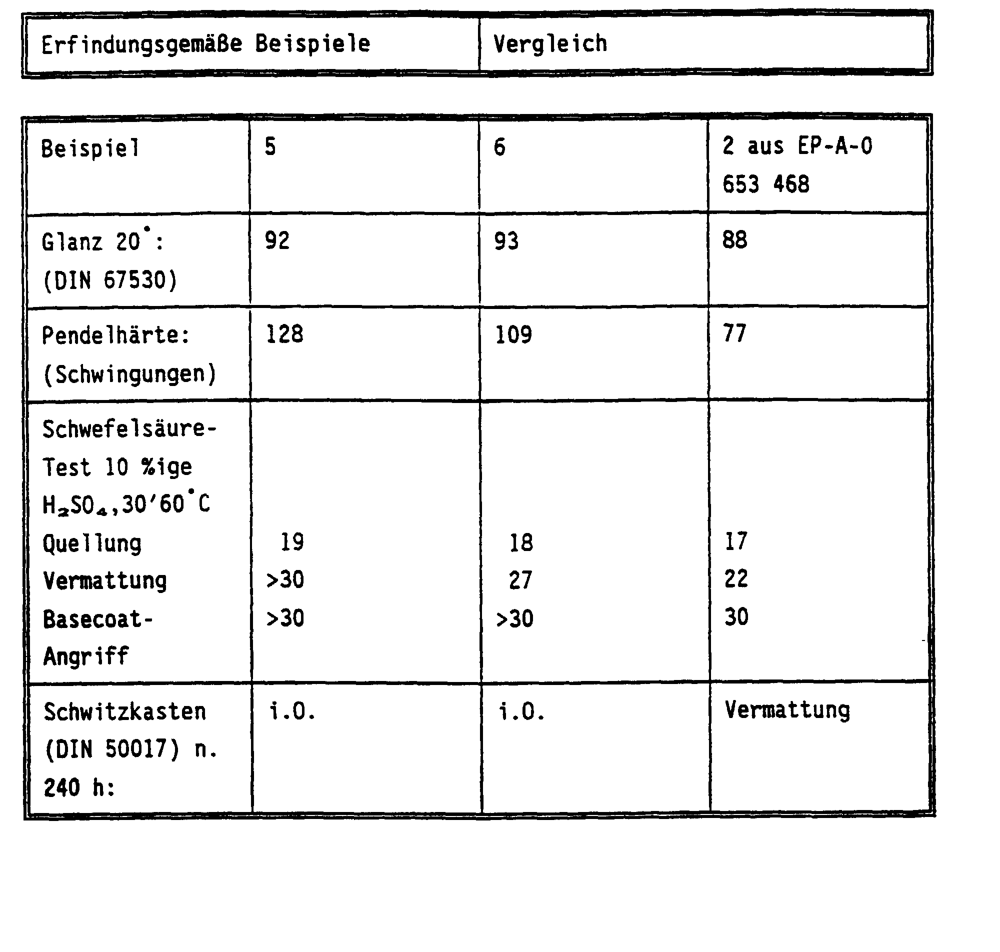

## Patentansprüche

1. Verfahren zur Herstellung von Mehrschichtlackierungen, bei dem auf ein gegebenenfalls vorbeschichtetes Substrat eine Basislackschicht aus einem Pigmente enthaltenden wäßrigen Überzugsmittel aufgebracht wird und diese mit einer transparenten Decklackschicht überlackiert wird, dadurch gekennzeichnet, daß die transparente Decklackschicht aus einem nicht-wäßrigen Überzugsmittel hergestellt wird, das als Bindemittel enthält:
A) 10 bis 90 Gew.-% eines oder mehrerer hydroxyfunktioneller (Meth)acryl-Copolymerisate, erhältlich aus
a1) 20 bis 40 Gew.-% eines oder mehrerer Hydroxyalkylester der (Meth)acrylsäure
a2) 10 bis 30 Gew.-% eines oder mehrerer nichtfunktionalisierter (Meth)acrylate
a3) 0 bis 5 Gew.-% einer oder mehrerer ungesättigter Carbonsäuren
a4) 10 bis 60 Gew.-% eines oder mehrerer nichtfunktionalisierter von a2) unterschiedlicher Monomerer
a5) 0 bis 15 Gew.-% eines oder mehrerer aminofunktioneller Monomerer
a6) 0 bis 5 Gew.-% eines oder mehrerer mehrfach ungesättigter Monomerer
B) 90 bis 10 Gew.-% eines oder mehrerer hydroxyfunktioneller Polyester,
C) 0 bis 40 Gew.-% eines oder mehrerer von A) und B) unterschiedlicher hydroxyfunktioneller Bindemittel.
D) 5 bis 50 Gew.- % eines oder mehrerer blockierter Polyisocyanate,
E) 5 bis 40 Gew.-% einer oder mehrerer mit den Hydroxylgruppen der Komponenten A), B) und gegebenenfalls C) unter Ether- und/oder Estergruppenbildung vernetzenden Komponenten auf Triazinbasis,
wobei die Summe der Komponenten A) bis E) sich jeweils auf 100 Gew.-% ergänzt,
und wobei mindestens 50 Gew.-% der (Meth)acryl-Copolymerisate, bezogen auf die Gesamtmenge der Komponente A) in Gegenwart von einem oder mehreren der hydroxyfunktionellen Polyester, entsprechend mindestens 20 Gew.-% der Gesamtmenge der Komponente B) hergestellt worden sind.

2. Verfahren nach Anspruch 1, dadurch gekennzeichnet, daß das nicht-wäßrige Überzugsmittel zur Herstellung der transparenten Decklackschicht als Bindemittel enthält:
A) 10 bis 90 Gew.-% eines oder mehrerer hydroxyfunktioneller (Meth)acryl-Copolymerisate, erhältlich aus
a1) 20 bis 40 Gew.-% eines oder mehrerer Hydroxyalkylester der (Meth)acrylsäure
a2) 10 bis 30 Gew.-% eines oder mehrerer nichtfunktionalisierter (Meth)acrylate
a3) 0 bis 5 Gew.-% einer oder mehrerer ungesättigter Carbonsäuren
a4) 10 bis 60 Gew.-% eines oder mehrerer nichtfunktionalisierter von a2) unterschiedlicher Monomerer
a5) 0 bis 15 Gew.-% eines oder mehrerer aminofunktioneller Monomerer
a6) 0 bis 5 Gew.-% eines oder mehrerer mehrfach ungesättigter Monomerer
B) 90 bis 10 Gew.- % eines oder mehrerer hydroxyfunktioneller Polyester, erhältlich aus
b1) 0 bis 60 Gew.-% an Monocarbonsäuren des Molekulargewichtsbereichs 112 bis 600
b2)10 bis 70 Gew.-% Polycarbonsäuren des Molekulargewichtsbereichs 98 bis 600 oder Anhydriden derartiger Polycarbonsäuren
b3)5 bis 40 Gew.-% an drei- und/oder mehrwertigen Alkoholen des Molekulargewichtsbereichs 100 bis 400
b4)0 bis 40 Gew.-% an zweiwertigen Alkoholen des Molekulargewichtsbereichs 62 bis 2000
b5)0 bis 30 Gew.-% einwertigen Alkoholen des Molekulargewichtsbereichs 100 bis 400
b6)0 bis 15 Gew.-% an Hydroxycarbonsäuren des Molekulargewichtsbereichs 90 bis 280 oder an Lactonen derartiger Hydroxycarbonsäuren
b7)0 bis 15 Gew.-% an Aminoalkoholen des Molekulargewichtsbereichs 61 bis 300 und/oder an Aminocarbonsäuren des Molekulargewichtsbereichs 75 bis 260
C)0 bis 40 Gew. % eines oder mehrerer von A) und B) unterschiedlicher hydroxyfunktioneller Bindemittel,
D) 5 bis 50 Gew.-% eines oder mehrerer blockierter Polyisocyanate,
E) 5 bis 40 Gew.-% einer oder mehrerer mit den Hydroxylgruppen der Komponenten A), B) und gegebenenfalls C) unter Ether- und/oder Estergruppenbildung vernetzenden Komponenten auf Triazinbasis,
wobei die Summen der Komponenten A) bis E), a1) bis a6) und b1) bis b7) sich jeweils zu 100 Gew.-% ergänzen
und wobei mindestens 50 Gew.-% der (Meth)acryl-Copolymerisate bezogen auf die Gesamtmenge der Komponente A) in Gegenwart von einem oder mehreren der hydroxyfunktionellen Polyester, entsprechend mindestens 20 Gew.-% der Gesamtmenge der Komponente B) hergestellt worden sind.

3. Verfahren nach einem der vorhergehenden Ansprüche, dadurch gekennzeichnet, daß die verwendeten (Meth)acryl-Copolymeren A) ein Zahlenmittel der Molmasse (Mn) von 1000 bis 10000, eine OH-Zahl von 30 bis 250 mg KOH/g und eine Säurezahl von 0 bis 60 mg KOH/g aufweisen und daß die verwendeten Polyesterharze B) ein Zahlenmittel der Molmasse (Mn) von 200 bis 5000, eine OH-Zahl von 30 bis 450 mg KOH/g und eine Säurezahl von 0 bis 60 mg KOH/g aufweisen.

4. Verfahren nach einem der Ansprüche 1 bis 3, dadurch gekennzeichnet, daß die nicht-wäßrige Decklackschicht naß-in-naß auf die wäßrige Basislackschicht aufgebracht und beide Schichten gemeinsam eingebrannt werden.

5. Verfahren nach einem der Ansprüche 1 bis 4, dadurch gekennzeichnet, daß es zur Serienlackierung von Kraftfahrzeugen durchgeführt wird.

## Claims

1. Process for the production of multilayer lacquer coatings, in which a base lacquer layer of an aqueous coating composition containing pigments is applied onto an optionally precoated substrate and this base lacquer layer is overcoated with a transparent topcoat lacquer of a non-aqueous coating composition which contains as binder:
A) 10 to 90 wt.% of one or more hydroxy-functional (meth)acrylic copolymers obtainable from
a1) 20 to 40 wt.% of one or more hydroxyalkyl esters of (meth)acrylic acid
a2) 10 to 30 wt.% of one of more unfunctionalised (meth)acrylates
a3) 0 to 5 wt.% of one or more unsaturated carboxylic acids
a4) 10 to 60 wt.% of one or more unfunctionalised monomers differing from a2)
a5) 0 to 15 wt.% of one or more amino-functional monomers
a6) 0 to 5 wt.% of one or more polyunsaturated monomers
B) 90 to 10 wt.% of one or more hydroxy-functional polyesters,
C) 0 to 40 wt.% of one or more hydroxy-functional binders differing from A) and B),
D) 5 to 50 wt.% of one or more blocked polyisocyanates,
E) 5 to 40 wt.% of one or more triazine-based components which crosslink with the hydroxyl groups of components A), B) and optionally C) to form ether and/or ester groups,
wherein the sum of components A) to E) in each case amounts to 100 wt.%,
and wherein at least 50 wt.% of the (meth)acrylic copolymers, relative to the total quantity of component A), were produced in the presence of one or more of the hydroxy-functional polyesters, corresponding to at least 20 wt.% of the total quantity of component B).

2. Process according to claim 1, characterised in that the non-aqueous coating composition for the production of the transparent topcoat lacquer layer contains as binder:
A) 10 to 90 wt.% of one or more hydroxy-functional (meth)acrylic copolymers obtainable from
a1) 20 to 40 wt.% of one or more hydroxyalkyl esters of (meth)acrylic acid
a2) 10 to 30 wt.% of one of more unfunctionalised (meth)acrylates
a3) 0 to 5 wt.% of one or more unsaturated carboxylic acids
a4) 10 to 60 wt.% of one or more unfunctionalised monomers differing from a2)
a5) 0 to 15 wt.% of one or more amino-functional monomers
a6) 0 to 5 wt.% of one or more polyunsaturated monomers
B) 90 to 10 wt.% of one or more hydroxy-functional polyesters obtainable from
b1) 0 to 60 wt.% of monocarboxylic acids of the molecular weight range from 112 to 600
b2) 10 to 70 wt.% of polycarboxylic acids of the molecular weight range from 98 to 600 or anhydrides of such polycarboxylic acids
b3) 5 to 40 wt.% of tri- and/or polyhydric alcohols of the molecular weight range from 100 to 400
b4) 0 to 40 wt.% of dihydric alcohols of the molecular weight range from 62 to 2000
b5) 0 to 30 wt.% of monohydric alcohols of the molecular weight range from 100 to 400
b6) 0 to 15 wt.% of hydroxycarboxylic acids of the molecular weight range from 90 to 280 or of lactones of such hydroxycarboxylic acids
b7) 0 to 15 wt.% of aminoalcohols of the molecular weight range from 61 to 300 and/or of aminocarboxylic acids of the molecular weight range from 75 to 260
C) 0 to 40 wt.% of one or more hydroxy-functional binders differing from A) and B),
D) 5 to 50 wt.% of one or more blocked polyisocyanates,
E) 5 to 40 wt. % of one or more triazine-based components which crosslink with the hydroxyl groups of components A), B) and optionally C) to form ether and/or ester groups,
wherein the sums of components A) to E), a1) to a6) and b1) to b7) in each case amount to 100 wt.%, and wherein at least 50 wt.% of the (meth)acrylic copolymers, relative to the total quantity of component A), were produced in the presence of one or more of the hydroxy-functional polyesters, corresponding to at least 20 wt.% of the total quantity of component B).

3. Process according to one of the preceding claims, characterised in that the (meth)acrylic copolymers A) used have a number average molecular weight (Mn) of 1000 to 10000, an OH value of 30 to 250 mg of KOH/g and an acid value of 0 to 60 mg of KOH/g and that the polyester resins B) used have a number average molecular weight (Mn) of 200 to 5000, an OH value of 30 to 450 mg of KOH/g and an acid value of 0 to 60 mg of KOH/g.

4. Process according to one of claims 1 to 3, characterised in that the non-aqueous topcoat lacquer layer is applied wet-on-wet onto the aqueous base lacquer layer and the two coats are stoved together.

5. Process according to one of claims 1 to 4, characterised in that it is used for automotive original lacquer coating.

## Revendications

1. Procédé pour appliquer des revêtements à plusieurs couches dans lequel, sur un support portant éventuellement un revêtement préalable, on applique une couche de peinture de base à l'aide d'un produit de revêtement aqueux contenant des pigments et, en superposition sur cette couche, on applique une couche de peinture de couverture transparente à l'aide d'un produit de revêtement non aqueux qui contient en tant que liants :
A) 10 à 90 % en poids d'un ou plusieurs copolymères (méth)acryliques à fonctions hydroxy, obtenus à partir de
a1) 20 à 40 % en poids d'un ou plusieurs esters hydroalkyliques de l'acide (méth)acrylique,
a2) 10 à 30 % en poids d'un ou plusieurs (méth)acrylates non fonctionnalisés,
a3) 0 à 5 % en poids d'un ou plusieurs acides carboxyliques insaturés ,
a4) 10 à 60 % en poids d'un ou plusieurs monomères non fonctionnalisés autres que ceux mentionnés ci-dessus sous a2),
a5) 0 à 15 % en poids d'un ou plusieurs monomères à fonctions amino,
a6) 0 à 5 % en poids d'un ou plusieurs monomères polyinsaturés,
B) 90 à 10 % en poids d'un ou plusieurs polyesters à fonctions hydroxy,
C) 0 à 40 % en poids d'un ou plusieurs liants à fonctions hydroxy autres que ceux mentionnés ci-dessus sous A) et B),
D) 5 à 50 % en poids d'un ou plusieurs polyisocyanates bloqués,
E) 5 à 40 % en poids d'un ou plusieurs composants à base de triazines, réticulant avec les groupes hydroxy des composants A), B) et éventuellement C) avec formation de groupes éther et/ou ester,
la somme des composants A) à E) représentant dans tous les cas 100 % en poids,
et au moins 50 % en poids des copolymères (méth)acryliques, par rapport à la quantité totale du composant A), ayant été préparés en présence d'un ou plusieurs des polyesters à fonctions hydroxy représentant au moins 20 % en poids de la quantité totale du composant B)

2. Procédé selon la revendication 1, caractérisé en ce que le produit de revêtement non aqueux servant à l'application de la couche de peinture de couverture transparente contient en tant que liants :
A) 10 à 90 % en poids d'un ou plusieurs copolymères (méth)acryliques à fonctions hydroxy, obtenus à partir de
a1) 20 à 40 % en poids d'un ou plusieurs esters hydroxyalkyliques de l'acide (méth)acrylique,
a2) 10 à 30 % en poids d'un ou plusieurs (méth)acrylates non fonctionnalisés,
a3) 0 à 5 % en poids d'un ou plusieurs acides carboxyliques insaturés,
a4) 10 à 60 % en poids d'un ou plusieurs monomères non fonctionnalisés autres que ceux mentionnés ci-dessus sous a2),
a5) 0 à 15 % en poids d'un ou plusieurs monomères à fonctions amino,
a6) 0 à 5 % en poids d'un ou plusieurs monomères polyinsaturés,
B) 90 à 10 % en poids d'un ou plusieurs polyesters à fonctions hydroxy obtenus à partir de
b1) 0 à o0 % en poids d'acides monocarboxyliques de poids moléculaire 112 à 600,
b2) 10 à 70 % en poids d'acides polycarboxyliques de poids moléculaire 98 à 600 ou leurs anhydrides,
b3) 5 à 40 % en poids d'alcools tri- et/ou polyvalents de poids moléculaire 100 à 400,
b4) 0 à 40 % en poids d'alcools divalents de poids moléculaire 62 à 2000,
b5) 0 à 30 % en poids d'alcools monovalents de poids moléculaire 100 à 400,
b6) 0 à 15 % en poids d'acides hydroxycarboxyliques de poids moléculaires 90 à 280 ou leurs lactones,
b7) 0 à 15 % en poids d'aminoalcools de poids moléculaire 61 à 300 et/ou d'acides aminocarboxyliques de poids moléculaire 75 à 260,
C) 0 à 40 % en poids d'un ou plusieurs liants à fonctions hydroxy autres que ceux mentionnés ci-dessus sous A) et B),
D) 5 à 50 % en poids d'un ou plusieurs polyisocyanates bloqués,
E) 5 à 40 % en poids d'un ou plusieurs composants à base de triazines réticulant avec les groupes hydroxy des composants A), B) et éventuellement C) avec formation de groupes éther et/ou ester,
la somme des composants A) à E), a1) à a6) et b1) à b7) représentant dans tous les cas 100 % en poids,
et au moins 50 % en poids des copolymères (méth)acryliques, par rapport à la quantité totale du composant A), ayant été préparés en présence d'un ou plusieurs des polyesters à fonctions hydroxy représentant au moins 20 % en poids de la quantité totale du composant B).

3. Procédé selon l'une des revendications qui précèdent, caractérisé en ce que les copolymères (méth)acryliques A) mis en oeuvre ont une masse moléculaire moyenne, moyenne en nombre, Mn, de 1000 à 10 000, un indice d'OH de 30 à 250 mg de KOH/g et un indice d'acide de 0 à 60 mg de KOH/g et en ce que les résines de polyesters B) mises en oeuvre ont une masse moléculaire moyenne, moyenne en nombre, Mn, de 200 à 5000, un indice d'OH de 30 à 450 mg de KOH/g et un indice d'acide de 0 à 60 mg de KOH/g.

4. Procédé selon l'une des revendications 1 à 3, caractérisé en ce que la couche de peinture de couverture non aqueuse est appliquée au mouillé-sur-mouillé sur la couche de peinture de base aqueuse et en ce que les deux couches sont cuites ensemble.

5. Procédé selon l'une des revendications 1 à 4, caractérisé en ce qu'on l'exploite pour la peinture en série de véhicules.
